# EUROPEAN PATENT SPECIFICATION

(11) **EP 3 807 610 B1**
(45) Date of publication and mention of the grant of the patent: **01.03.2023**
(21) Application number: 19729238.6
(22) Date of filing: 04.06.2019
(51) Int. Cl.: G01M 3/16, B60C 11/24

(54) **A MOISTURE DETECTOR AND A METHOD FOR MAKING SUCH**
FEUCHTIGKEITSDETEKTOR UND VERFAHREN ZU SEINER HERSTELLUNG
DÉTECTEUR D'HUMIDITÉ ET SON PROCÉDÉ DE FABRICATION

(30) Priority: 12.06.2018 NO 20180811
(43) Date of publication of application: 21.04.2021
(73) Proprietor: Fyster, As, 1266 Oslo (NO)
(72) Inventor: HELLERUD, Wiggo R., 1405 Langhus (NO)
(74) Representative: Onsagers AS
(86) International application number: PCT/EP2019/064510
(87) International publication number: WO 2019/238473

(56) References cited:
- DE-A1-102012 112 147
- FR-A- 1 377 519
- US-A1- 2010 203 394
- US-B1- 6 175 310

## Description

### TECHNICAL FIELD

The invention relates to constructional details of a moisture detector and a method for making such. All parts of the moisture detector are built from and fixed to same base material which is shaped to a compact design suitable for being integrated in a housing adapted for being installed in different objects where moisture is to be detected.

### BACKGROUND

Moisture detectors are well known and used for different purposes. Examples are detection of leakages, soil moisture, trapped moisture in building etc.

US 20101203394 A1 describes a moisture detector having a flat structural set-up.

FR 1 377 519 A describes a moisture detector adapted for detecting leaks in pipes.

DE 10 2012 112147 A1 describes a device for detecting leaks in a liquid line.

US 6 175 310 B1 describes an elongated, flexible tape to be applied to any surface to be monitored for water or other liquid leaks.

The applicant has previously developed a simple and inexpensive way of automatically detecting and indicating tire wear and the degree of tire wear by using a moisture detector located in a tread of the tire.

During use, a tire for a vehicle is worn in the tread area which is the part of a tire that normally has a groove pattern which is in contact with a road. The tread of a tire is specifically designed to provide traction for stopping, starting, cornering and to provide long lasting wear.

Wear of a tire takes place over the time used due to friction forces working between the tire and a road surface. If a worn tire is not replaced in time, accidents may happen due to skidding on bald or nearly bald tires. Worn tires are also more susceptible to damage from road hazards.

Tires should therefore be removed from service and replaced when they reach a certain tread depth, which is the distance from the tread surface to the bottom of the main grooves.

Wear on a tire can be determined by visual inspection and manual measuring of the tire tread depth.

The applicant presents a solution in EP 3007913 B1, where a device for detecting wear of a tire is describes, and where the device comprises at least one moisture detector installed in the tread of a tire. When a tire has been worn to a certain degree, water will at some point penetrate and activate an accumulator that will start generating power to a transmitter reporting that the tire has been worn to a certain degree. The EP-patent describes conceptual features of a self-powered moisture detector that is used for detecting wear of a tire.

The prior art does however not describe constructional details of an advantageous embodiment of a moisture detector having a small form factor, and that can be produced from same flat shaped base material that is shaped to a compact moisture detector that can be used for different purposes such as for instance detecting wear of a tire.

### BRIEF SUMMARY OF THE INVENTION

An object of the present invention is to provide a moisture detector as defined in claim 1, comprising constructional features necessary for detecting and transmitting that moisture has been detected. It is further an object that the moisture detector has a small form factor suitable to be integrated in a tread of a tire. The moisture detector comprises:
- a tube with an open and a closed end, where the tube is shaped from a layered structure of at least three distinct regions made of a flat shaped base material, where a first region has a circular shape, and a second and a third region each have a rectangular shape and a length corresponding to the circumference of the first region, and wherein the second and third regions are applied with different material of an anode material or a cathode material;
- an intermediate layer having a fluid suction capacity, and which is saturated with salt crystals and placed between the layered structure comprising the second and third region;
- separators separating the anode and cathode material and the intermediate layer;
- electronic components fixed to the first region, and
- electrical connections connecting the electronic components to the anode and cathode materials.

Further constructional features of the moisture detector are defined in the dependent claims.

The invention is also defined by a method for making a moisture detector as defined in claim 17. The method comprises:
- making at least three distinct regions of a flat shaped base material, where a first region has a circular shape, and a second and a third region each have a rectangular shape and a length corresponding to the circumference of the first region;
- fixing electronic components to the first region;
- applying different materials on the second and third regions, the materials being an anode material and a cathode material;
- providing an electrical connection connecting the electronic components to the anode and cathode materials;
- applying separators to the anode or cathode material;
- placing an intermediate layer of a material between a layered structure comprising the second and third regions, where the intermediate layer has a fluid suction capacity and is saturated with salt crystals, and
- shaping a tube from the layered structure by bending it along its longest sides;
- closing an open end of the tube by means of the first region.

Other aspects and advantages of the present invention will become apparent from the following description, taken in conjunction with the accompanying drawings, illustrating by way of examples.

### DETAILED DESCRIPTION

The invention will now be explained in detail with reference to the drawings showing constructional details of the moisture detector in different design phases, where:
Figures 1A-1C show different embodiments of a first phase of the construction of the moisture detector where distinct flat shaped regions are used as base material;
Figure 2A shows the construction where different components are attached to the base material;
Figure 2B shows the construction where the rectangular shaped regions are layered with an intermediate layer of a material having a fluid suction capacity;
Figure 3 shows the construction where the layered structure is bent along its longest sides making a tube, and
Figure 4 shows an embodiment of the moisture detector used for detecting wear of a tire.

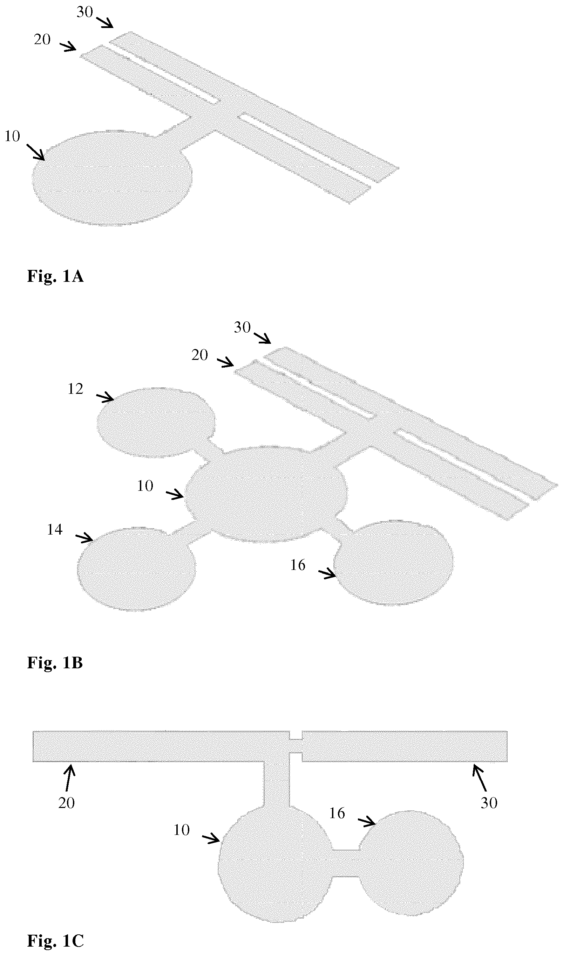

Figure 1A shows the first phase of the construction of the moisture detector were three distinct flat shaped regions provide a base material for supporting different components comprised in the construction. A first region 10 has a circular shape, and a second and a third region 20, 30 are placed parallel to each other, and have rectangular shapes with lengths corresponding to the circumference of the first region 10, i.e. the circular shaped region.

Figure 1B shows another embodiment of the base material, where there is a total of six distinct flat shaped regions making the base material. In this embodiment there are three additional circular shaped regions 12, 14, 16 connected to the first region 10. Except from this the rest of the configuration is like the one shown in Figure 1A. Additional regions provide added area for components. Each of the additional regions has a smaller footprint than the first region 10.

Figure 1C shows yet another embodiment with one additional circular shaped region 16 connected to the first region 10. In this embodiment, the rectangular shaped second and third regions 20, 30 are placed in a serial configuration instead of in parallel.

In figures 1B and 1C the additional shaped regions have a circular shape. Other shapes are also feasible. The footprint of the shapes must be smaller than the first region 10. The reason for this is that additional shapes are folded above the first region 10 in the final phase of the design.

In one embodiment, the flat shaped base material for supporting different components comprised in the construction is Kapton. This is a flexible polyimide film with stable material properties across a wide range of temperatures. Kapton is well suited for use in flexible printed circuits, i.e. for flexible electronics. In one embodiment, the base thickness of the base material is approximately 0.1mm.

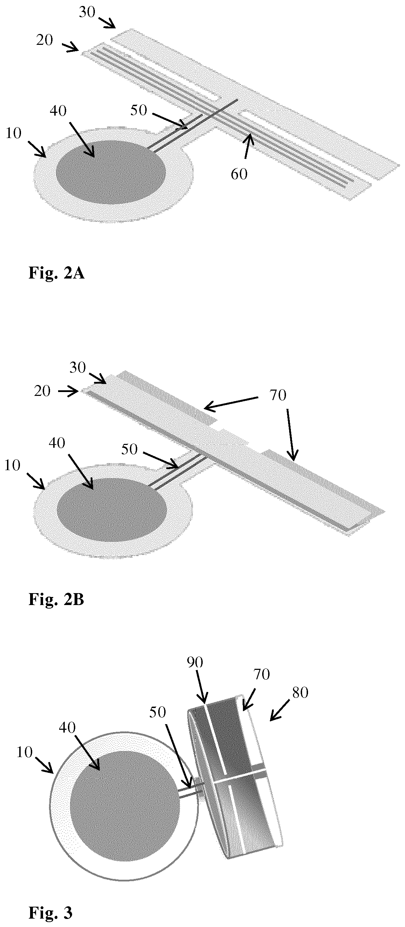

The following description uses the configuration shown in Fig. 2A as an example of an embodiment for explaining the invention. This corresponds to the configuration of the base material as shown in Fig. 1A.

In one embodiment of the invention, the distinct regions are cut from one and same piece of flat shaped material, e.g. Kapton, and the second and third regions 20, 30 are parallel to each other, and where all three regions are joined with sections of same base material as shown in Fig. 1A.

According to the invention, electronic components are fixed to the first circular shaped region 10. In one embodiment, these are components for transmitting signals upon moisture detection. The components can be fixed directly to the base material or be attached to a printed circuit board that is fixed to the first circular shaped region. Surface mounted components are preferred since they occupy less space.

The moisture detector further comprises an anode and a cathode material. Each of these is applied on either the second 20 or third region 30. In one embodiment, the anode material is Silver Chloride. In another embodiment, it is Cuprous Chloride. The cathode material is in one embodiment Magnesium.

Separators 60 are applied to the anode or cathode material. These will ensure that the cathode and anode are separated when configured in a layered structure for providing a dry charged battery. In one embodiment, the separators 60 are made from extended moulded plastic threads and placed on the surface in the direction along the longest sides of the second and third regions 20, 30, as shown in figure 2A.

The construction according to the invention further comprises electrical connections 50 connecting the electronic components 40 to the anode and cathode material. In one embodiment, the electrical connections 50 are fixed to the flat shaped base material as shown in figures 2A, 2B and 3.

Figure 2B shows a second phase of the construction of the moisture detector where the cathode and anode materials are layered with an intermediate layer 70 of a material having a fluid suction capacity. If the second and third regions 20, 30 are made in one and same base material joined with sections, the regions are folded around the intermediate layer 70 to make the layered structure.

The intermediate layer 70 is a material having a fluid suction capacity. This is in one embodiment a textile saturated with salt crystals, e.g. NaCl. This can be achieved by dipping a piece of textile in brine before drying the textile. The dry textile is then used as the intermediate layer 70.

In a preferred embodiment, parts of the intermediate layer 70 protrude from the layered structure. The protruding part or wing part of the intermediate layer 70 may be divided into several wings, e.g. two or three wings. Figure 2A shows an embodiment with two wings.

The material of the intermediate layer acts as a trigger activating the dry charged battery when exposed to fluid, e.g. water. The layered structure, comprising the second and third regions 20, 30, separators 60 and intermediate layer 70 is in one embodiment made with a thickness of approximately 0.5mm.

The layered second and third regions are bent along its longest sides making a tube 80, as shown in Figure 3. The tube shape can be created by bending the regions around a plastic former having a slightly smaller diameter.

In one embodiment, the electronics for transmitting signals is connected to an antenna 90 that is fixed to the outer side of the tube 80. The electronics may further comprise means for transmitting an identification of the moisture detector. This may for instance be an RFID chip. The construction may also include an induction coil for charging capacitors. If capacitors of a certain size are used in the construction, the configurations of a base material shown in Figures 1B or 1C are preferred since the available total area provided for components is larger. Capacitors may for instance be fixed to a circular shape 16 connected to the first region 10. Use of capacitors in the construction of the moisture detector is advantageous since they can be charged with an unstable power source but are able to deliver stable power supply when discharging during a time period sufficient for electronic components to be activated and operable.

To complete the construction of the moisture detector, an open end of the tube 80 is closed by the first region 10. If the first and second regions 10, 20 are made in one and same base material joined by sections of same base material, an open end of the tube 80 is closed by bending the first region 10 to close the open end of the tube 80. Additional circular shapes, as shown in Fig. 1B and 1C are folded on top of the first region 10 when closing the tube 80.

According to a preferred embodiment, the electronic components 40 are fixed to the side of the first circular shaped region 10 facing the inside of the tube 80 when the open end of the tube 80 is closed by the first region 10. Said RFID chip may then be placed on the other side of the first circular shaped region 10. If several circular shaped regions 12, 14, 16 are used these will all be folded such that they will face the inside of the tube 80, thereby utilizing the space inside the tube 80.

In one embodiment of the invention, parts of the intermediate layer 70 protrude from the layered structure at the open end of the tube 80. It is then folded down along the outer surface of the tube 80, as shown in figure 2A.

This final phase of the construction of the moisture detector makes it very compact and easy to install in devices where moisture is to be detected.

The construction can be made very small. The circular shaped region may for instance have a diameter of 10 mm, and the tube shape made from the layered structure may have a diameter of 7 mm and a height of 2-6 mm. When water is sucked up by the intermediate layer 70, due to capillary effect, the water will act as an electrolyte trigging the dry charged battery, thereby producing power for the electronic components 40.

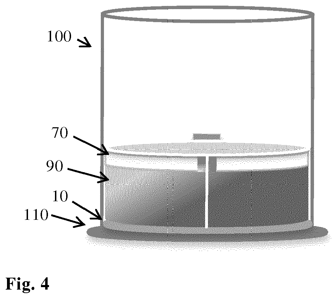

Figure 4 shows an embodiment of the moisture detector used for detecting wear of a tire. In this embodiment, the moisture detector may further comprise an outer housing 100 having an open and closed end, where the closed end is fitted with a flange 110. The closed end of the tube 80 is placed adjacent the closed end of the outer housing 100. The housing may for instance be made of plastic.

This embodiment of the moisture detector is easy to install in a tire. When installing the moisture detector in a tread area of a tire, a small hole is drilled and the housing 100 comprising the moisture detector is inserted. There are several ways of inserting and securing the housing 100 to a tire. It may be pushed into a drilled hole with force or screwed in if the outer part of the housing is made with threads. The flange 110 will ensure that the housing 100 will be kept in place.

When the housing 100 is installed, the open end is plugged by filling the tube 80 and outer housing 100 with a wear material, which normally is rubber from the tread area of the tire. This will then be worn at a same rate as the rubber in the tread zone of the tire.

Two or more materials may be used to fill and plug the tube 80 and the housing 100. Foam may for instance be used for filling the tube 80 or a part of it, while rubber may be used for filling the housing. When the hosing 100 and the tube 80 are filled and plugged, the resulting moisture detector will be very compact and robust.

The depth at which the housing 100 is installed in a tire, and the height of the rubber above the housing 100, as well as the height of the housing 100 itself will depend on different factors, such for instance type of tire where it is installed, and how much rubber to wear down before the moisture detector is to be activated.

When a certain amount of rubber is worn, water will at some point reach the wings of the intermediate layer 70 having the fluid suction capacity. The water will then trigger the dry charged battery and power will be generated. The electronic components 40 will then be activated for transmitting signals indicating wear of the tire. This may include transmitting the identification of the moisture detector.

For receiving signals sent from a transmitter comprised in the electronics of the moisture detector, a receiver must be used. Type of receiver used can be one mounted in the vehicle where the tire is mounted, or it can be a portable receiver. The only requirement is that the receiver can receive the signals transmitted from the transmitter. More details of this is described in said EP 3007913 B1.

The present invention further comprises a method for making a moisture detector.

The first step is to make at least three distinct regions of a flat shaped base material, e.g. Kapton. A first region 10 has a circular shape and a second and a third region 20, 30 have rectangular shapes with lengths corresponding to the circumference of the first region 10, i.e. the circular shaped region.

In one embodiment of the method, three distinct regions are cut from one piece of same flat shaped base material, and the second and third regions 20, 30 are placed parallel to each other and where all regions are joined with sections of same base material.

The next step is to fix electronic components 40 to the first region 10. These are configured for notifying of detected moisture.

An anode material is then applied on either the second or third region 20, 30, and a cathode material is applied on the other region. As mentioned above, the anode material may be Silver Chloride or Cuprous Chloride, and the cathode material may be Magnesium. Other suitable materials may also be used as anode and cathode materials.

The next step is to provide electrical connection for connecting the electronic components 40 to the anode and cathode materials. Separators 60 are then applied to the anode or cathode material.

The second and third regions 20, 30 are then layered with an intermediate layer 70 of a material having a fluid suction capacity.

The layered structure is then bent along its longest sides making a tube 80, where one open end of the tube 80 is closed by the first region 10.

In one embodiment, the intermediate layer 70 is made such that parts of it protrude from the layered structure at the open end of the tube 80. Details of this have been described above.

If the moisture detector is to be used for detecting wear of tires, it is further placed in an outer housing 100 having an open and closed end. The closed end comprises a flange 110, and the closed end of the tube 80 is placed adjacent to the closed end of the outer housing 100.

The housing 100, comprising the moisture detector, is inserted into a premade hole in the tread zone of a tire, and the open ends of the tube 80 and outer housing 100 are filled with a wear material.

The final construction of the moisture detector can be made very small, it is completely self-supported and can be used for detecting moisture at different installation where wear of a surface occurs over time.

As understood from the description above, the invention concerns the constructional features of the moisture detector, and how to make this. There are different areas of applications. The example above described a wear sensor for a tire. The principle is that the moisture detector will not detect any moisture if a tire is not worn.

The moisture detector may be passive for year before being activated by moisture. The detector is well suited for being used in other areas were moisture is to be detected independently of whether a material is worn. How the intermediate layer 70 of the material having the fluid suction capacity is exposed to moisture is the factor contributing to the sensitivity of the moisture detector.

When using the moisture detector for detecting wear of tires, small dimensions as described above are preferred. In other installations, larger dimensions can be used and adjusted according to the type of installation.

## Claims

1. A moisture detector, comprising:
- a tube (80) with an open and a closed end, wherein the tube (80) is shaped from a layered structure of at least three distinct regions made of a flat shaped base material, where a first region (10) has a circular shape, and a second and a third region (20, 30) each have a rectangular shape and a length corresponding to the circumference of the first region (10), and wherein the second and third regions (20, 30) are applied with different material of an anode material and a cathode material;
- an intermediate layer (70) having a fluid suction capacity and which is saturated with salt crystals and placed between the layered structure comprising the second and third regions (20, 30);
- separators (60) separating the anode and cathode material and the intermediate layer (70);
- electronic components (40) fixed to the first region (10), and
- electrical connections (50) connecting the electronic components (40) to the anode and cathode materials.

2. The moisture detector according to claim 1, **characterized in that** parts of the intermediate layer (70) protrude from the layered structure at the open end of the tube (80).

3. The moisture detector according to claim 1 or 2, **characterized in that** the intermediate layer (70) is a textile saturated with salt crystals.

4. The moisture detector according to any of the previous claims,
**characterized in that** the flat shaped base material is Kapton.

5. The moisture detector according to any of the previous claims,
**characterized in that** the thickness of the flat shaped base material is 0.1mm.

6. The moisture detector according to any of the previous claims,
**characterized in that** the at least three distinct regions are cut from one and same piece of flat shaped base material, and where the second and third regions (20, 30) are parallel to each other and where all three regions are joined with sections of same flat base material.

7. The moisture detector according to any of the previous claims,
**characterized in that** the electrical connections (50) connecting the electronic components (40) to the anode and cathode material are fixed to the flat shaped base material.

8. The moisture detector according to any of the previous claims,
**characterized in that** the electronic components (40) comprises components for transmitting signals upon moisture detection.

9. The moisture detector according to claim 8, **characterized in that** the electronic components (40) for transmitting signals are connected to an antenna (90) that is fixed to outer side of the tube (80).

10. The moisture detector according to any of the previous claims,
**characterized in that** the anode material is Silver Chloride or Cuprous Chloride.

11. The moisture detector according to any of the previous claims,
**characterized in that** the cathode material is Magnesium.

12. The moisture detector according to any of the previous claims,
**characterized in that** the separators (60) are made from extended moulded plastic threads.

13. The moisture detector according to any of the previous claims,
**characterized in that** the layered structure comprising the second and third regions (20, 30), separators (60) and the intermediate layer (70) have a thickness of 0.5mm.

14. The moisture detector according to any of the previous claims,
**characterized in that** the electronic components (40) are facing the inside of the tube when closed by the first region (10).

15. The moisture detector according to any of the previous claims,
**characterized in** further comprising an outer housing (100) having an open and closed end, where the closed end comprises a flange (110), and where the closed end of the tube (80) is adjacent the closed end of the outer housing (100).

16. The moisture detector according to claim 15, **characterized in that** the open ends of the tube (80) and outer housing (100) are filled with a wear material.

17. A method for making a moisture detector, comprising:
- making at least three distinct regions of a flat shaped base material, wherein a first region (10) has a circular shape, and a second and a third region (20, 30) each have a rectangular shape and a length corresponding to the circumference of the first region (10);
- fixing electronic components (40) to the first region (10);
- applying different materials on the second and third regions (20, 30), the materials being an anode material and a cathode material;
- providing an electrical connection (50) connecting the electronic components (40) to the anode and cathode materials;
- applying separators (60) to the anode or cathode material;
- placing an intermediate layer (70) of a material between a layered structure comprising the second and third regions (20, 30), where the intermediate layer (70) has a fluid suction capacity and is saturated with salt crystals, and
- shaping a tube (80) from the layered structure by bending it along its longest sides;
- closing an open end of the tube (80) by means of the first region (10).

18. The method according to claim 17, **characterized in** letting parts of the intermediate layer (70) protrude from the layered structure at the open end of the tube (80).

19. The method according to claim 17 or 18, **characterized in** cutting out the at least three distinct regions from one and same piece of flat shaped base material, and where the second and third regions (20, 30) are placed parallel to each other and where all three regions are joined with sections of same flat base material.

20. The method according to any of the claim 17 to 19, **characterized in** placing the moisture detector in an outer housing (100) having an open and closed end, where the closed end comprises a flange (110), and where the closed end of the tube (80) is placed adjacent to the closed end of the outer housing (100).

21. The method according to claim 20, **characterized in** filling the open ends of the tube (80) and outer housing (100) with a wear material.

## Patentansprüche

1. Feuchtigkeitsdetektor, umfassend:
eine Röhre (80) mit einem offenen und einem geschlossenen Ende, wobei die Röhre (80) aus einer geschichteten Struktur von wenigstens drei verschiedenen Bereichen aus einem flach geformten Basismaterial geformt ist, ein erster Bereich (10) eine kreisförmige Form hat und ein zweiter und ein dritter Bereich (20, 30) jeweils eine rechteckige Form und eine Länge haben, die dem Umfang des ersten Bereichs (10) entspricht, und der zweite und der dritte Bereich (20, 30) mit unterschiedlichem Material aus einem Anodenmaterial und einem Kathodenmaterial versehen sind;
eine mit Salzkristallen gesättigte Zwischenschicht (70) mit Flüssigkeitsansaugvermögen, die zwischen der den zweiten und dritten Bereich (20, 30) umfassenden Schichtstruktur angeordnet ist;
Separatoren (60), die das Anoden- und Kathodenmaterial und die Zwischenschicht (70) trennen;
elektronische Bauteile (40), die an dem ersten Bereich (10) befestigt sind, und
elektrische Verbindungen (50), die die elektronischen Bauteile (40) mit den Anoden- und Kathodenmaterialien verbinden.

2. Feuchtigkeitsdetektor nach Anspruch 1, **dadurch gekennzeichnet, dass** Teile der Zwischenschicht (70) an dem offenen Ende der Röhre (80) aus dem Schichtaufbau herausragen.

3. Feuchtigkeitsdetektor nach Anspruch 1 oder 2, **dadurch gekennzeichnet, dass** die Zwischenschicht (70) ein mit Salzkristallen gesättigtes Textil ist.

4. Feuchtigkeitsdetektor nach einem der vorhergehenden Ansprüche, **dadurch gekennzeichnet, dass** das flach geformte Basismaterial Kapton ist.

5. Feuchtigkeitsdetektor nach einem der vorhergehenden Ansprüche, **dadurch gekennzeichnet, dass** die Dicke des flach geformten Basismaterials 0,1 mm beträgt.

6. Feuchtigkeitsdetektor nach einem der vorhergehenden Ansprüche, **dadurch gekennzeichnet, dass** die wenigstens drei unterschiedlichen Bereiche aus ein und demselben Stück eines flach geformten Basismaterials geschnitten sind, wobei der zweite und der dritte Bereich (20, 30) parallel zueinander sind und alle drei Bereiche mit Abschnitten desselben flachen Basismaterials verbunden sind.

7. Feuchtigkeitsdetektor nach einem der vorhergehenden Ansprüche, **dadurch gekennzeichnet, dass** die elektrischen Verbindungen (50), die die elektronischen Bauteile (40) mit dem Anoden- und Kathodenmaterial verbinden, an dem flach geformten Basismaterial befestigt sind.

8. Feuchtigkeitsdetektor nach einem der vorhergehenden Ansprüche, **dadurch gekennzeichnet, dass** die elektronischen Bauteile (40) Bauteile zum Senden von Signalen bei Feuchtigkeitserfassung umfassen.

9. Feuchtigkeitsdetektor nach Anspruch 8, **dadurch gekennzeichnet, dass** die elektronischen Bauteile (40) zum Senden von Signalen mit einer Antenne (90) verbunden sind, die an der Außenseite der Röhre (80) befestigt ist.

10. Feuchtigkeitsdetektor nach einem der vorhergehenden Ansprüche, **dadurch gekennzeichnet, dass** das Anodenmaterial Silberchlorid oder Kupferchlorid ist.

11. Feuchtigkeitsdetektor nach einem der vorhergehenden Ansprüche, **dadurch gekennzeichnet, dass** das Kathodenmaterial Magnesium ist.

12. Feuchtigkeitsdetektor nach einem der vorhergehenden Ansprüche, **dadurch gekennzeichnet, dass** die Separatoren (60) aus langgestreckten, geformten Kunststofffäden hergestellt sind.

13. Feuchtigkeitsdetektor nach einem der vorhergehenden Ansprüche, **dadurch gekennzeichnet, dass** die Schichtstruktur, die den zweiten und dritten Bereich (20, 30), die Separatoren (60) und die Zwischenschicht (70) umfasst, eine Dicke von 0,5 mm aufweist.

14. Feuchtigkeitsdetektor nach einem der vorhergehenden Ansprüche, **dadurch gekennzeichnet, dass** die elektronischen Bauteile (40) dem Inneren der Röhre zugewandt sind, wenn sie durch den ersten Bereich (10) verschlossen ist.

15. Feuchtigkeitsdetektor nach einem der vorhergehenden Ansprüche, **dadurch gekennzeichnet, dass** er weiterhin ein äußeres Gehäuse (100) mit einem offenen und einem geschlossenen Ende umfasst, wobei das geschlossene Ende einen Flansch (110) umfasst und das geschlossene Ende der Röhre (80) an das geschlossene Ende des äußeren Gehäuses (100) angrenzt.

16. Feuchtigkeitsdetektor nach Anspruch 15, **dadurch gekennzeichnet, dass** die offenen Enden von Röhre (80) und Außengehäuse (100) mit einem Verschleißmaterial gefüllt sind.

17. Verfahren zum Herstellen eines Feuchtigkeitsdetektors, umfassend:
Herstellen von wenigstens drei verschiedenen Bereichen eines flach geformten Basismaterials, wobei ein erster Bereich (10) eine kreisförmige Form hat und ein zweiter und ein dritter Bereich (20, 30) jeweils eine rechteckige Form und eine dem Umfang des ersten Bereichs (10) entsprechende Länge haben;
Befestigen von elektronischen Bauteilen (40) an dem ersten Bereich (10);
Aufbringen unterschiedlicher Materialien auf den zweiten und dritten Bereich (20, 30), wobei es sich bei den Materialien um ein Anodenmaterial und ein Kathodenmaterial handelt;
Vorsehen einer elektrischen Verbindung (50), die die elektronischen Bauteile (40) mit den Anoden- und Kathodenmaterialien verbindet;
Aufbringen von Separatoren (60) auf das Anoden- oder Kathodenmaterial;
Anordnen einer Zwischenschicht (70) aus einem Material zwischen einer Schichtstruktur, die den zweiten und den dritten Bereich (20, 30) umfasst, wobei die Zwischenschicht (70) eine Flüssigkeitssaugfähigkeit aufweist und mit Salzkristallen gesättigt ist, und
Formen einer Röhre (80) aus der Schichtstruktur durch Biegen entlang der längsten Seiten;
Verschließen eines offenen Endes der Röhre (80) mit Hilfe des ersten Bereichs (10).

18. Verfahren nach Anspruch 17, **dadurch gekennzeichnet, dass** Teile der Zwischenschicht (70) an dem offenen Ende der Röhre (80) aus dem Schichtaufbau herausragen.

19. Verfahren nach Anspruch 17 oder 18, **dadurch gekennzeichnet, dass** die wenigstens drei unterschiedlichen Bereiche aus ein und demselben Stück flach geformten Basismaterials ausgeschnitten werden, wobei der zweite und der dritte Bereich (20, 30) parallel zueinander angeordnet sind und alle drei Bereiche mit Abschnitten desselben flachen Basismaterials verbunden werden.

20. Verfahren nach einem der Ansprüche 17 bis 19, **dadurch gekennzeichnet, dass** der Feuchtigkeitsdetektor in einem Außengehäuse (100) mit einem offenen und einem geschlossenen Ende angeordnet wird, wobei das geschlossene Ende einen Flansch (110) umfasst und das geschlossene Ende der Röhre (80) an das geschlossene Ende des Außengehäuses (100) angrenzend angeordnet wird.

21. Verfahren nach Anspruch 20, **dadurch gekennzeichnet, dass** die offenen Enden von Röhre (80) und Außengehäuse (100) mit einem Verschleißmaterial gefüllt werden.

## Revendications

1. Détecteur d'humidité, comprenant :
- un tube (80) avec une extrémité ouverte et une extrémité fermée, le tube (80) étant façonné à partir d'une structure stratifiée d'au moins trois régions distinctes constituées d'un matériau de base de forme plate, où une première région (10) présente une forme circulaire, et chacune de deuxième et troisième régions (20, 30) présente une forme rectangulaire et une longueur correspondant à la circonférence de la première région (10), et des matériaux différents consistant en un matériau d'anode et un matériau de cathode étant appliqués sur les deuxième et troisième régions (20, 30) ;
- une couche intermédiaire (70) ayant une capacité d'aspiration de fluide et qui est saturée de cristaux de sel et placée entre la structure stratifiée comprenant les deuxième et troisième régions (20, 30) ;
- des séparateurs (60) séparant les matériaux d'anode et de cathode et la couche intermédiaire (70) ;
- des composants électroniques (40) fixés à la première région (10), et
- des liaisons électriques (50) reliant les composants électroniques (40) aux matériaux d'anode et de cathode.

2. Détecteur d'humidité selon la revendication 1, **caractérisé en ce que** des parties de la couche intermédiaire (70) font saillie de la structure stratifiée à l'extrémité ouverte du tube (80).

3. Détecteur d'humidité selon la revendication 1 ou 2, **caractérisé en ce que** la couche intermédiaire (70) est un textile saturé de cristaux de sel.

4. Détecteur d'humidité selon l'une quelconque des revendications précédentes, **caractérisé en ce que** le matériau de base de forme plate est du kapton.

5. Détecteur d'humidité selon l'une quelconque des revendications précédentes, **caractérisé en ce que** l'épaisseur du matériau de base de forme plate est 0,1 mm.

6. Détecteur d'humidité selon l'une quelconque des revendications précédentes, **caractérisé en ce que** les au moins trois régions distinctes sont découpées à partir d'un seul et même morceau de matériau de base de forme plate, et dans lequel les deuxième et troisième régions (20, 30) sont parallèles l'une à l'autre et dans lequel les trois régions sont toutes jointes avec des sections du même matériau de base de forme plate.

7. Détecteur d'humidité selon l'une quelconque des revendications précédentes, **caractérisé en ce que** les liaisons électriques (50) reliant les composants électroniques (40) aux matériaux d'anode et de cathodes sont fixées au matériau de base de forme plate.

8. Détecteur d'humidité selon l'une quelconque des revendications précédentes, **caractérisé en ce que** les composants électroniques (40) comprennent des composants pour transmettre des signaux lors d'une détection d'humidité.

9. Détecteur d'humidité selon la revendication 8, **caractérisé en ce que** les composants électroniques (40) pour transmettre des signaux sont reliés à une antenne (90) qui est fixée à un côté extérieur du tube (80).

10. Détecteur d'humidité selon l'une quelconque des revendications précédentes, **caractérisé en ce que** le matériau d'anode est du chlorure d'argent ou du chlorure de cuivre.

11. Détecteur d'humidité selon l'une quelconque des revendications précédentes, **caractérisé en ce que** le matériau de cathode est du magnésium.

12. Détecteur d'humidité selon l'une quelconque des revendications précédentes, **caractérisé en ce que** les séparateurs (60) sont constitués de filetages plastiques moulés étendus.

13. Détecteur d'humidité selon l'une quelconque des revendications précédentes, **caractérisé en ce que** la structure stratifiée comprenant les deuxième et troisième régions (20, 30), les séparateurs (60) et la couche intermédiaire (70) ont une épaisseur de 0,5 mm.

14. Détecteur d'humidité selon l'une quelconque des revendications précédentes, **caractérisé en ce que** les composants électroniques (40) font face à l'intérieur du tube lorsqu'il est fermé par la première région (10).

15. Détecteur d'humidité selon l'une quelconque des revendications précédentes, **caractérisé en ce qu'**il comprend en outre un boîtier extérieur (100) ayant une extrémité ouverte et une extrémité fermée, dans lequel l'extrémité fermée comprend une bride (110), et
dans lequel l'extrémité fermée du tube (80) est adjacente à l'extrémité fermée du boîtier extérieur (100).

16. Détecteur d'humidité selon la revendication 15, **caractérisé en ce que** les extrémités ouvertes du tube (80) et du boîtier extérieur (100) sont remplies d'un matériau d'usure.

17. Procédé de fabrication d'un détecteur d'humidité, comprenant les étapes consistant en :
- la fabrication d'au moins trois régions distinctes constituées d'un matériau de base de forme plate, où une première région (10) présente une forme circulaire, et chacune de deuxième et troisième régions (20, 30) présente une forme rectangulaire et une longueur correspondant à la circonférence de la première région (10) ;
- la fixation de composants électroniques (40) à la première région (10) ;
- l'application de matériaux différents sur les deuxième et troisième régions (20, 30), les matériaux étant un matériau d'anode et un matériau de cathode ;
- la fourniture d'une liaison électrique (50) reliant les composants électroniques (40) aux matériaux d'anode et de cathode ;
- l'application de séparateurs (60) au matériau d'anode ou de cathode ;
- le placement d'une couche intermédiaire (70) d'un matériau entre une structure stratifiée comprenant les deuxième et troisième régions (20, 30), où la couche intermédiaire (70) a une capacité d'aspiration de fluide et est saturée de cristaux de sel, et
- le façonnage d'un tube (80) à partir de la structure stratifiée en la pliant le long de ses côtés les plus longs ;
- la fermeture d'une extrémité ouverte du tube (80) au moyen de la première région (10).

18. Procédé selon la revendication 17, **caractérisé en ce qu'**il est laissé des parties de la couche intermédiaire (70) faire saillie à partir de la structure stratifiée à l'extrémité ouverte du tube (80).

19. Procédé selon la revendication 17 ou 18, **caractérisé par** le découpage des au moins trois régions distinctes à partir d'un seul et même morceau de matériau de base de forme plate, et dans lequel les deuxième et troisième régions (20, 30) sont placées parallèlement l'une à l'autre et dans lequel les trois régions sont toutes jointes avec des sections du même matériau de base de forme plate.

20. Procédé selon l'une quelconque des revendications 17 à 19, **caractérisé par** le placement du détecteur d'humidité dans un boîtier extérieur (100) ayant une extrémité ouverte et une extrémité fermée, dans lequel l'extrémité fermée comprend une bride (110), et dans lequel l'extrémité fermée du tube (80) est placée adjacente à l'extrémité fermée du boîtier extérieur (100).

21. Procédé selon la revendication 20, **caractérisé par** le remplissage des extrémités ouvertes du tube (80) et du boîtier extérieur (100) avec un matériau d'usure.
